**Europäisches Patentamt**

**European Patent Office**

**Office européen des brevets**

(11) Veröffentlichungsnummer: **0 036 409**
B1

(12) **EUROPÄISCHE PATENTSCHRIFT**

(45) Veröffentlichungstag der Patentschrift:
25.05.83

(21) Anmeldenummer: **81890042.5**

(22) Anmeldetag. **12.03.81**

(51) Int. Cl.³· **F 27 D 15/02**

(54) Verfahren zur Kühlung von heissen Schüttgütern.

(30) Priorität **12.03.80 AT 1351/80**

(43) Veröffentlichungstag der Anmeldung:
**23.09.81 Patentblatt 81/38**

(45) Bekanntmachung des Hinweises auf die Patenterteilung:
**25.05.83 Patentblatt 83/21**

(84) Benannte Vertragsstaaten:
**BE DE FR GB LU NL SE**

(56) Entgegenhaltungen.
**DE-A-2 140 508**
**DE-B-1 135 816**
**FR-A-2 183 514**

(73) Patentinhaber: **WAAGNER-BIRO AKTIENGESELLSCHAFT, Stadlauer-Strasse 54, A-1221 Wien (AT)**

(72) Erfinder: **Beckmann, Georg, Dr., Jacquingasse 55/10, A-1030 Wien (AT)**

(74) Vertreter: **Wallner, Gerhard, Dipl.-Ing., Waagner-Birò Aktiengesellschaft Patentreferat Postfach 11, A-1221 Wien (AT)**

BUNDESDRUCKEREI BERLIN

## Verfahren zur Kühlung von heißen Schüttgütern

Die Erfindung betrifft ein Verfahren zur Kühlung von heißen Schüttgütern, wie z. B. glühendem Koks; Klinker oder Sinter in einem Kühlbehälter mit Hilfe eines über eine Wärmerückgewinnungsanlage geführten Kühlgases, welches in mindestens zwei in Strömungsrichtung des Schüttgutes gesehen, hintereinander angeordneten Aufgabestellen in Form von Teilströmen an das in Richtung der Schwerkraft im Kühlbehälter strömende Schüttgut abgegeben und welches das Schüttgut von unten nach oben umströmt, sowie einen Kühlkreislauf zur Durchführung des Verfahrens.

Aus der DE-B-1 135 816 ist ein Kühlverfahren für gebrannten Zement oder ähnliches Material bekannt, bei dem ein Teil des Abgases aus dem Drehrohrofen zur Kühlung verwendet wird, während ein anderer Teil des Kühlgases aus Luft besteht, die erhitzt wird, wobei die Wärme letzten Endes dem Drehrohrofen wieder zugeführt wird.

Die FR-A-2 183 514 offenbart ebenfalls ein bekanntes Kühlverfahren für im Ofen erhitzte Schüttgüter, bei dem zum Teil ein Kreislaufgas verwendet wird, welches in das Schüttgut eingeblasen und an einer oberen Stelle wieder abgesaugt wird. Zum anderen Teil wird Umgebungsluft verwendet, die offensichtlich auch im vorerhitzten Zustand als Verbrennungsluft im nachgeschalteten Drehrohrofen verwendet wird.

Die DE-A-2 140 508 offenbart ein bekanntes Luftführungsverfahren für einen Rostkühler, bei dem ein Teil des Gases im Kreislauf geführt wird und ein anderer Teil nach zweimaliger Durchführung durch den Kühlrost in den Drehrohrofen eingeleitet wird, wo die Luft zur Verbrennung des Brennstoffes verwendet wird.

Es ist ferner aus der AT-C-99 923 bekannt, glühenden Koks in einem Kühlbehälter mit Hilfe eines Kühlgases zu kühlen, wobei dieses über einen Gasverteiler an mehreren Stellen mit gleicher Temperatur in das Schüttgut eingetragen wird und nach seiner Aufheizung gesammelt einer Wärmerückgewinnungsanlage zugeführt wird.

Die bekannten Anlagen haben den Nachteil, daß das gekühlte Schüttgut eine relativ hohe Temperatur aufweist, so daß neben dem Wärmeverlust auch Beschädigungen der nachgeschalteten Förderelemente auftreten. Um diesem Nachteil zu begegnen kann man das Kühlgas durch besondere Nach-Kühleinrichtungen auf noch tiefere Temperatur abkühlen, wobei jedoch ein Verlust an Wirtschaftlichkeit in Kauf genommen werden muß.

Die Erfindung hat es sich zur Aufgabe gestellt, die Wärmerückgewinnung zu erhöhen, das Schüttgut auf tiefere Temperatur abzukühlen und die Aufheizung des Kühlgases durch entsprechenden Gasdurchsatz so zu regeln, daß die Temperaturdifferenz zwischen Schüttgut und Kühlgas etwa konstant gehalten wird und Temperaturspitzen im Kühlgas vermindert werden. Dadurch läßt sich das Wärmeangebot des Schüttgutes, dem Wärmebedarf der Wärmerückgewinnungsanlage anpassen, sowie insbesondere ein Teil der niederen Temperaturwärme, gegebenenfalls über einen Zwischenwärmeträger für einen Verwendungszweck außerhalb des Dampferzeugers verwerten, wodurch bei einer Kokstrockenkühlanlage auch der Kohletrockner in das Verfahren eingebunden werden kann. Ein wesentlicher Nebeneffekt bei der Kokstrockenkühlung ist darin zu sehen, daß das erfindungsgemäße Verfahren die Bildung von Glutnestern im abgekühlten Koksstrom durch bessere Kühlgasverteilung bekämpft.

Das erfindungsgemäße Verfahren zur Lösung der angeführten Aufgabe ist dadurch gekennzeichnet, daß das Kühlgas im geschlossenen Kreislauf geführt wird, derart, daß das vom Kühlbehälter oben gesammelt, abströmende Kühlgas in der Wärmerückgewinnungsanlage in unterschiedlich temperierte Teilströme aufgeteilt wird. diese Teilströme in getrennten Kanälen zu den einzelnen Aufgabestellen herangebracht werden und daß dem Schüttgut unterhalb der obersten Aufgabestelle kälteres Kühlgas als an der jeweils oberen Aufgabestelle zugeführt wird.

Die erfindungsgemäße Kühlvorrichtung zur Durchführung des Verfahrens ist dadurch gekennzeichnet, daß von der Wärmerückgewinnungsanlage zu den einzelnen Aufgabestellen für das rückgekühlte und unterschiedlich temperierte Kühlgas getrennte Zuführungsleitungen vorgesehen sind.

Die Erfindung erlaubt eine bessere Kühlgasverteilung im Kühlbehälter und bewirkt eine Dämpfung der Temperaturspitzen im erhitzten Kühlgasstrom.

Die Erfindung wird anhand der Fig. 1—4, aufgrund eines Beispieles für die trockene Kokskühlung erläutert. Es zeigt

Fig. 1 ein schematisches Schaltbild,

Fig. 2 ein Abkühldiagramm von glühendem Koks im Gasstrom und

Fig. 3 und 4 zwei Konstruktionsvarianten zu Fig. 1.

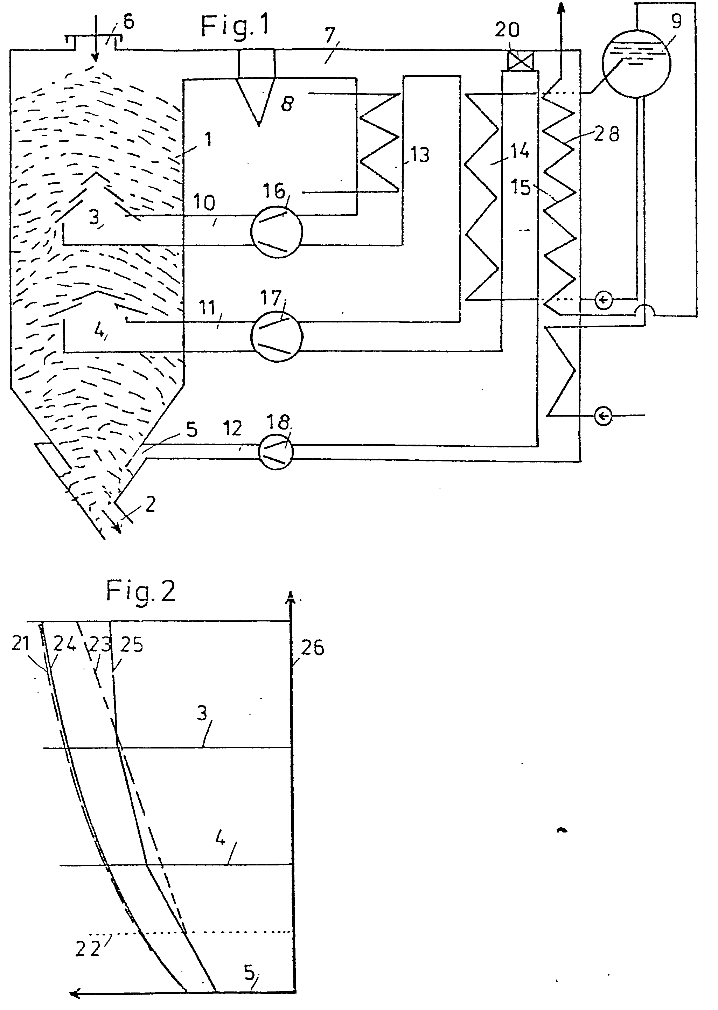

Das Schaltbild in Fig. 1 zeigt einen Kühlbehälter 1 oder Bunker zur Abkühlung von heißem glühendem Koks. Der Kühlbehälter 1 weist deckelseitig einen Einlaß 6 auf der gegenüberliegenden Seite einen Auslaß 2 für den abgekühlten Koks und drei Aufgabestellen 3, 4, 5 für das Kühlgas auf, welches nach Durchströmung des Schüttgutes gesammelt, über die Heißgasleitung 7 abgeführt und zunächst einer Heißgasentstaubungseinrichtung 8 zugeführt wird. Dann wird das heiße Kühlgas an den Heizflächen 13, 14, 15 der Wärmerückgewinnungsanlage 9 abgekühlt und in Teilströme aufgespalten. Die Wärmerückgewinnungsanlage ist normalerweise ein Dampferzeuger, dessen einzelne Heizflächen 13, 14, 15 in verschiedenen Schichten angeordnet sind und infolge ihres unterschiedlichen Wärmebedarfs das Kühlgas auf eine entsprechend unterschiedliche Temperatur abkühlen. Das abgekühlte Kühlgas wird über die Zuführungsleitungen 10, 11, 12 den Aufgabestellen 3, 4, 5 im Bunker zugeführt. Zur Regelung der entsprechenden Kühlgasmengen sind in den Zuführungsleitungen 10, 11, 12 Kreislaufgebläse 16, 17, 18 vorgesehen, deren Fördermenge so abgestimmt ist, daß im Bunker 1 an den einzelnen Aufgabestellen 3, 4 das auftretende Kühlgas etwa dieselbe Temperatur aufweist wie jenes, das an der Aufgabestelle vorbeiströmt und an den tiefer gelegenen Aufgabestellen 4, 5 aufgegeben wird. Durch diese Maßnahme wird der Mischungsverlust im Bunker 1 vermieden. Im Rahmen der Erfindung kann ferner eine der Heizflächen z. B. 13 auch für einen vom Dampferzeuger der Wärmerückgewinnungsanlage 9 unabhängigen Wärmeverbraucher verwendet werden. Zum Schutze der Überhitzerheizflächen 15 vor Wärmespitzen im erhitzten Kühlgas kann ein Wärmespeicher 20 der zu schützenden Heizfläche vorgesetzt werden.

In Fig. 2 ist ein Abkühlungsschaubild für glühenden Koks dargestellt. Die strichlierte Linie 21 stellt die Temperaturänderung des glühenden Kokses bei seinem Weg durch den Kühlbehälter einer bekannten Anlage dar, deren Kühlgasaufgabestelle durch die punktierte Linie 22 angedeutet ist. Der Verlauf der zugehörigen Kühlgastemperatur ist durch die strichlierte Linie 23 angegeben. Durch die erfindungsgemäße Aufteilung der Kühlgasaufgabe an den Aufgabestellen 3, 4, 5 soll sich an der Abkühlung des heißen Kokses nichts ändern. In diesem Sinne ist die ausgezogene Kurve 24 bis auf ihr unteres Ende zusammenfallend zur punktierten Kurve eingezeichnet. Die Aufheizung des Kühlgases ist durch die ausgezogene Linie 25 gekennzeichnet, die an den Aufgabestellen 3 und 4 jeweils einen Knick aufweist, der durch die geänderte Gasmenge gegeben ist. Als Maß für die rückgewonnene Wärme kann der Abschnitt auf der Geraden 26 betrachtet werden, die auch die jeweilige Schüttguthöhe über der untersten Kühlgasaufgabe anzeigt, wobei die durch die Erfindung zusätzlich rückgewonnene Wärme unterhalb der punktierten Linie 22 zu finden ist. Die Gerade 5 als Schaubildachse zeigt die Temperaturänderung an.

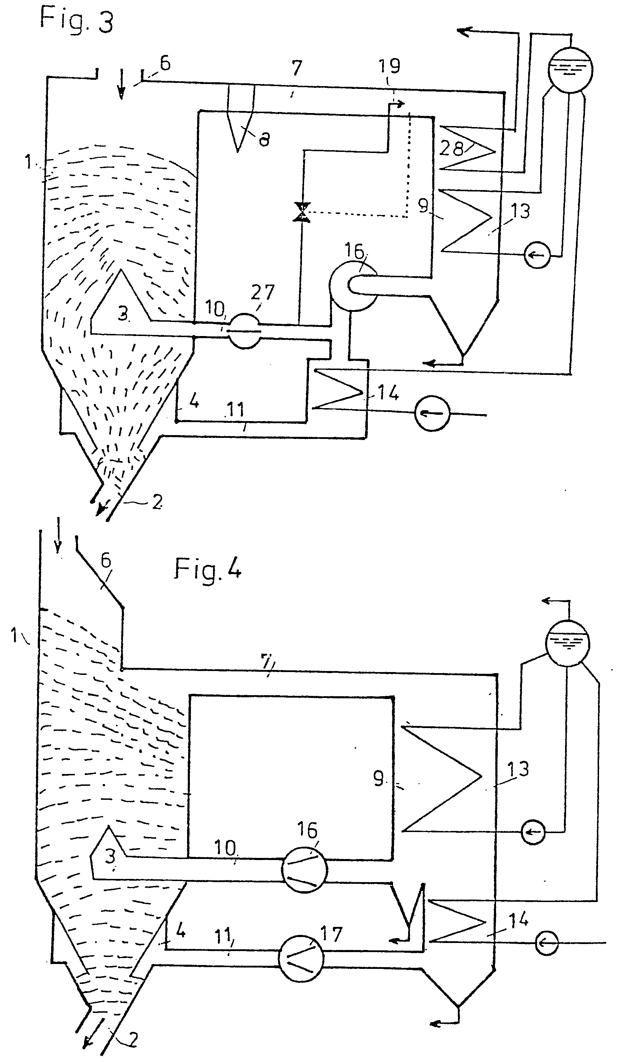

In Fig. 3 ist eine Konstruktionsvariante zu Fig. 1 schematisch dargestellt, bei der im Gegensatz zu Fig. 1 nur zwei Aufgabestellen 3 und 4 im Kühlbunker angeordnet sind und bei welcher bei der Wärmerückgewinnungsanlage 9 das gesammelte Kühlgas erst nach einer teilweisen Abkühlung in zwei Teilströme bzw. in die beiden Zuführungsleitungen 10 und 11 aufgespalten wird. Auch haben die beiden Zuführungsleitungen 10 und 11 nur ein gemeinsames Gebläse 16. Dafür ist in der Zuführungsleitung 10 eine Drosselstelle 27 eingebaut, so daß auch hier eine entsprechende Regelung der kalten Kühlgasmengen möglich ist. Zum Schutz der Überhitzerheizfläche 28, der Wärmerückgewinnungsanlage 9 ist eine regelbare Kühlgasrückführung 19 vorgesehen, über welche abgekühltes Kühlgas dem heißen Kühlgas zugemischt wird.

In Fig. 4 ist eine weitere Variante zu Fig. 1 dargestellt, bei der die beiden kalten Kühlgasströme in den Zuführungsleitungen 10 und 11 durch die beiden Gebläse 16 und 17 geregelt werden. Der Bunker 1 weist im Bereich des Einlasses 6 eine Art Vorkammer auf, über welche die vom Kühlgas durchströmte Schütthöhe im Bunker 1, auch bei intermedierender Aufgabe des Schüttgutes konstant gehalten wird.

## Patentansprüche

1. Verfahren zur Kühlung von heißen Schüttgütern, wie z. B. glühendem Koks, Klinker oder Sinter in einem Kühlbehälter mit Hilfe eines über eine Wärmerückgewinnungsanlage geführten Kühlgases, welches in mindestens zwei, in Strömungsrichtung des Schüttgutes gesehen, hintereinander angeordneten Aufgabestellen in Form von Teilströmen an das in Richtung der Schwerkraft im Kühlbehälter strömende Schüttgut abgegeben wird und welches das Schüttgut von unten nach oben umströmt, dadurch gekennzeichnet, daß das Kühlgas im geschlossenen Kreislauf geführt wird derart, daß das vom Kühlbehälter oben gesammelt abströmende Kühlgas in der Wärmerückgewinnungsanlage in unterschiedlich temperierte Teilströme aufgeteilt wird, diese Teilströme in getrennten Kanälen zu den einzelnen Aufgabestellen herangebracht werden und daß dem Schüttgut unterhalb der obersten Aufgabestelle kälteres Kühlgas als an der jeweils oberen Aufgabestelle zugeführt wird.

2. Verfahren nach Anspruch 1, dadurch gekennzeichnet, daß die Menge und insbesondere die Temperatur des durch die einzelnen Aufgabestellen strömenden Kühlgases so geregelt wird, daß jeweils die Temperatur des Kühlgases im Schüttgut an der nächstoberen Aufgabestelle der Temperatur des Kühlgases entspricht, welches an dieser Stelle aufgegeben wird.

3. Verfahren nach Anspruch 1, dadurch gekennzeichnet, daß das am Schüttgut erhitzte Kühlgas in Teilströme aufgespalten und getrennten Wärmesenken zugeführt wird.

4. Verfahren nach Anspruch 1, dadurch gekennzeichnet, daß das erhitzte Kühlgas einem Wärmetauscher mit mehreren hintereinander geschalteten Heizflächen zugeführt wird, die mit abnehmenden Mengen des Kühlgases beaufschlagt werden, und daß die Differenzmengen den einzelnen Aufgabestellen zugeführt werden.

5. Kühlvorrichtung zur Durchführung des Verfahrens nach mindestens einem der Ansprüche 1—4, bei dem in einem Bunker (1) zur kontinuierlichen Kühlung von heißen Schüttgütern untereinander mehrere Aufgabestellen (3, 4, 5) für rückgekühltes Kühlgas vorgesehen sind und in der Nähe des Einlasses (6) des heißen Schüttgutes eine Heißgasableitung (7) für das erhitzte Kühlgas angeschlossen ist, die über eine Heißgasentstaubungseinrichtung (8) zu einer Wärmerückgewinnungsanlage (9) führt, dadurch gekennzeichnet, daß von der Wärmerückgewinnungsanlage (9) zu den einzelnen Aufgabestellen (3, 4, 5) für das rückgekühlte und unterschiedlich temperierte Kühlgas getrennte Zuführungsleitungen (10, 11, 12) vorgesehen sind.

6. Kühlvorrichtung nach Anspruch 5, dadurch gekennzeichnet, daß die Wärmerückgewinnungsanlage (9) als Dampferzeuger ausgebildet ist, dessen Heizflächen (13, 14, 15) in Schächten angeordnet sind, die von unterschiedlichen Mengen des heißen Kühlgases durchströmt werden.

7. Kühlvorrichtung nach Anspruch 6, dadurch gekennzeichnet, daß vor der Überhitzerheizfläche (15) des Dampferzeuger eine Einrichtung zur Vergleichmäßigung der heißen Kühlgastemperatur vorgesehen ist.

8. Kühlvorrichtung nach Anspruch 6, dadurch gekennzeichnet, daß die einzelnen Heizflächen (13, 14, 15) parallel im Kühlgasstrom angeordnet sind und über regelbare Kreislaufgebläse (16, 17, 18) mit den Aufgabestellen (3, 4, 5) verbunden sind.

9. Kühlvorrichtung nach Anspruch 6, dadurch gekennzeichnet, daß die Heizflächen (28, 13, 14) im Kühlgasstrom hintereinander angeordnet sind.

## Claims

1. Process for cooling hot bulk material in a cooling hopper, e.g. incandescent coke, clinker or sinter, by aid of a cooling gas conducted over a heat recovery system, said cooling gas being delivered to the bulk material flowing in the cooling hopper in the direction of gravity, said delivery taking place in the form of partial flows at at least two discharge points arranged one behind the other seen relative to the direction of flow of the bulk material, said cooling gas flowing about the bulk material from below in upward direction, characterized in that the cooling gas is conducted in a closes cycle in such a manner that the said gas flowing off collectively from the top of the cooling tank is separated in the heat recovery system into partial flows of different temperature, the said partial flows being conveyed towards the individual points of discharge in separate ducts and that cooling gas is supplied below the top charging point to the bulk material, the said gas being cooler than the gas at the particular top charging point.

2. Process according to claim 1 characterized in that the quantity and particularly the temperature of the cooling gas flowing through the individual charging points is so controlled that the temperature of the cooling gas in the bulk material at the next higher charging point corresponds in each case to the temperature of the cooling gas charged at this point.

3. Process according to claim 1 characterized in that the cooling gas heated by the bulk material is divided into partial flows and conveyed towards separate systems for the recovery of heat.

4. Process according to claim 1 characterized in that the heated cooling gas is conveyed to a heat exchanger comprising several heating surfaces connected in series, the said heating surfaces admitting decreasing quantities of cooling gas and the differential quantities being conducted to the individual charging stations.

5. Cooling device for carrying out the process according to at least one of claims 1—4 wherein in a hopper (1) several charging points (3, 4, 5) for recooled cooling gas are provided one below the other, the said points serving for the continuous cooling of hot bulk material, a hot gas discharge line (7) for the heated cooling gas being provided near the inlet (6) of the hot bulk material, the said hot gas discharge line (7) leading via a hot gas dust removal device (8) to a heat recovery system (9) characterized in that separate feeders (10, 11, 12) for the recooled cooling gas having different temperatures are provided from the heat recovery system (9) to the individual charging stations (3, 4, 5).

6. Cooling device according to claim 5 characterized in that the waste heat recovery system (9) is constructed as a steam generator whose heating surfaces (13, 14, 15) are arranged in shafts exposes to the throughflow of diverse quantities of hot cooling gas.

7. Cooling device according to claim 6 characterized in that a device for balancing the hot cooling gas temperature is provided ahead of the superheater surface (15) of the steam generator.

8. Cooling device according to claim 6 characterized in that the individual heating surfaces (13, 14, 15) are arranged in parallel in the cooling gas flow and that said surfaces are connected with the charging points (3, 4, 5) by adjustable circuit blowers (16, 17, 18).

9. Cooling device according to claim 6 characterized in that the heating surfaces (28, 13, 14) are arranged in the cooling gas flow one behind the other.

## Revendications

1. Procédé de refroidissement de matières déversables chaudes comme par exemple du coke, du clinker ou des crasses chauds dans un récipient refroidisseur à l'aide d'un gaz refroidisseur passant par une installation de récupération de chaleur, lequel est délivré en au moins deux emplacements de délivrance disposés, vus dans le sens d'écoulement de la matière déversable, l'un derrière l'autre, sous forme de courants partiels à la matière déversable s'écoulant dans le sens de la pesanteur dans le récipient refroidisseur et lequel s'écoule de bas en haut autour de la matière déversable, caractérisé en ce que le gaz refroidisseur est conduit en circuit fermé de telle façon que le gaz refroidisseur, collecté en haut et sortant du récipient refroidisseur, est subdivisé dans l'installation de récupération de chaleur en des courants partiels différemment tempérés, ces courants partiels étant amenés dans des canalisations séparées aux divers emplacements de délivrance et en ce qu'à la matière déversable en dessous de l'emplacement de délivrance le plus haut est amené du gaz refroidisseur plus froid que celui amené à l'emplacement de délivrance respectif supérieur.

2. Procédé selon la revendication 1, caractérisé en ce que la quantité et en particulier la température du gaz refroidisseur, s'écoulant par les divers emplacements de délivrance, sont réglées de telle façon que la température du gaz refroidisseur dans la matière déversable correspond chaque fois, à l'emplacement de délivrance supérieur le plus proche, à la température du gaz refroidisseur qui est délivré à cet emplacement.

3. Procédé selon la revendication 1, caractérisé en ce que le gaz refroidisseur, échauffé dans la matière déversable, est subdivisé en courants partiels et amené à des puits séparés d'absorption de chaleur.

4. Procédé selon la revendication 1, caractérisé en ce que le gaz refroidisseur échauffé est amené à un échangeur de chaleur à plusieurs surfaces de chauffe placées les unes derrière les autres, qui sont alimentées avec des quantités décroissantes du gaz refroidisseur et en ce que les quantités différentielles sont amenées aux divers emplacements de délivrance.

5. Dispositif de refroidissement pour l'exécution du procédé selon au moins l'une des revendications 1 à 4, dans lequel dans une trémie (1) pour le refroidissement continu de matières en vrac chaudes sont prévus plusieurs emplacements de délivrance (3, 4, 5) pour du gaz refroidisseur refroidi en retour et à procimité de l'entrée (6) de la matière en vrac chaude est raccordée une conduite d'évacuation de gaz chaud (7) pour le gaz refroidisseur échauffé, laquelle mène à une installation de récupération de chaleur (9) par l'intermédiaire d'un système de dépoussiérage de gaz chaud (8), caractérisé en ce que des conduites d'amenée séparées (10, 11, 12) sont prévues, de l'installation de récupération de chaleur (9) aux divers emplacements de délivrance (3, 4, 5), pour le gaz refroidisseur refroidi en retour et différemment tempéré.

6. Dispositif refroidisseur selon la revendication 5, caractérisé en ce que l'installation de récupération de chaleur (9) est réalisé sous forme de générateur de vapeur dont les surfaces de chauffe (13, 14, 15) sont disposées dans des gaines qui sont traversées par l'écoulement de quantités différentes du gaz refroidisseur chaud.

7. Dispositif refroidisseur selon la revendication 6, caractérisé en ce qu'avant la surface de chauffe de surchauffeur (15) du générateur de vapeur est prévu un système pour l'uniformisation de la température du gaz refroidisseur chaud.

8. Dispositif refroidisseur selon la revendication 6, caractérisé en ce que les diverses surfaces de chauffe (13, 14, 15) sont disposées parallèlement dans le courant de gaz refroidisseur et sont reliées aux emplacements de délivrance (3, 4, 5) par l'intermédiaire de ventilateurs soufflants rotatifs (16, 17, 18).

9. Dispositif refroidisseur selon la revendication 6, caractérisé en ce que les surfaces de chauffe (28, 13. 14) sont disposées les unes derrière les autres dans le courant de gaz refroidisseur.

Fig.1

Fig.2

Fig. 3

Fig. 4